# EUROPEAN PATENT APPLICATION

(11) **EP 4 661 186 A1**
(43) Date of publication of application: **10.12.2025**
(21) Application number: 24898056.7
(22) Date of filing: 25.11.2024
(51) Int. Cl.: H01M 50/375, H01M 50/383, H01M 50/367, H01M 10/653, H01M 50/178

(54) **BATTERY ASSEMBLY AND BATTERY PACK COMPRISING SAME**

(30) Priority: 01.12.2023 KR 20230172420; 14.11.2024 KR 20240162319
(71) Applicant: LG Energy Solution, Ltd., Seoul 07335 (KR)
(72) Inventor: JUNG, Seyun, Daejeon 34122 (KR); SEO, Sung Won, Daejeon 34122 (KR); KANG, Jongmo, Daejeon 34122 (KR); HWANG, Taewon, Daejeon 34122 (KR); LEE, Inje, Daejeon 34122 (KR)
(74) Representative: Plasseraud IP
(86) International application number: PCT/KR2024/018762
(87) International publication number: WO 2025/116462

(57) **Abstract**

A battery assembly according to an embodiment of the present disclosure is a battery assembly comprising a plurality of battery cell units, each comprising at least one battery cell and a cell cover covering a lower surface and both side surfaces of the respective at least one battery cell, in which the cell cover comprises at least one cell cover venting hole at a lower surface portion corresponding to the lower surface of the respective at least one battery cell, electrode leads protrude from both end surfaces in a longitudinal direction of the respective at least one battery cell, and a foamed layer is adjacent to at least one of the electrode leads of the respective at least one battery cell.

## Description

### [Technical Field]

### CROSS-REFERENCE TO RELATED APPLICATION

This application claims priority to and the benefit of Korean Patent Application No. 10-2023-0172420 filed at the Korean Intellectual Property Office on December 1, 2023, and Korean Patent Application No. 10-2024-0162319 filed at the Korean Intellectual Property Office on November 14, 2024, the entire contents of which are incorporated herein by reference.

The present invention relates to a battery assembly and a battery pack including the same, and more particularly, to a battery assembly and a battery pack including the same, which improve safety by inducing gas venting in a desired direction in a thermal runaway situation.

### [Background Art]

In modern society, as portable devices such as mobile phones, laptop computers, camcorders, and digital cameras have been used daily, the development of technologies in the fields related to mobile devices as described above has been actively pursued. In addition, secondary batteries that can be charged and discharged are used as power sources for electric vehicles (EVs), hybrid electric vehicles (HEVs), and plug-in hybrid electric vehicles (P-HEVs) as a solution to air pollution and the like caused by existing gasoline vehicles and the like that use fossil fuels, and the need for development of secondary batteries is increasing.

Currently commercially available secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are arranged with a separator being interposed therebetween, and a battery case that seals and accommodates the electrode assembly together with an electrolyte solution.

Generally, the lithium secondary battery may be classified into a can-type secondary battery in which the electrode assembly is embedded in a metal can, and a pouch-type secondary battery in which the electrode assembly is embedded in a pouch of an aluminum laminate sheet, depending on a shape of the exterior material.

In the case of a secondary battery used for small-sized devices, two to three battery cells are arranged, but in the case of a secondary battery used for medium-sized and large-sized devices such as automobiles, a battery module in which a large number of battery cells are electrically connected is used. Such a battery module has improved capacity and output by connecting a plurality of battery cells to each other in series or in parallel to form a battery cell stack. One or more battery modules can be mounted together with various control and protection systems, such as a battery management system (BMS), a battery disconnect unit (BDU), and a cooling system, to form a battery pack.

A battery pack includes a battery module as a subordinate concept, and the battery module includes the battery cell as a subordinate concept. The number of battery cells included in the battery module or the number of battery modules included in the battery pack can be determined in various ways depending on the output or capacity of the battery pack required for the electric vehicle.

However, for the battery pack, one of the typically important issues is safety. In particular, when a thermal event occurs in one of the plurality of battery cells included in the battery pack, it is necessary to block propagation of the thermal event to other battery cells and modules.

If thermal propagation between battery cells and modules is not properly suppressed, this may lead to thermal events in other battery cells included in the battery pack, which may cause greater problems such as ignition or explosion of the battery pack. Furthermore, the ignition or explosion occurring in the battery pack can cause significant damage to human life or property in the surrounding area. Therefore, such a battery pack is required to have a configuration that can appropriately control the thermal event and the propagation of the thermal event.

### [Disclosure]

### [Technical Problem]

The present disclosure attempts to provide a battery assembly and a battery pack including the same, which, when a thermal event occurs in a specific battery cell, can prevent the thermal event from propagating to other adjacent battery cells and battery assemblies by venting gases, particles, flames, or the like only in a specific intended direction, thereby moving them along a predetermined path and discharging them to the outside.
However, the problems to be solved by embodiments of the present disclosure are not limited to the above-described problems, and can be variously expanded within the scope of the technical spirit included in the present disclosure.

### [Technical Solution]

A battery assembly according to an embodiment of the present disclosure includes a plurality of battery cell units each, comprising at least one battery cell and a cell cover covering a lower surface and both side surfaces of the respective at least one battery cell, in which the cell cover comprises at least one cell cover venting hole at a lower surface portion corresponding to the lower surface of the respective at least one battery cell, electrode leads protrude from both end surfaces in a longitudinal direction of the respective at least one battery cell, and a foamed layer is adjacent to at least one of the electrode leads of the respective at least one battery cell.

The cell cover may include open portions on both sides through which the electrode leads are exposed, and the foamed layer may be configured to expand in volume at high temperatures to block both the open portions on both sides.

The battery assembly may further comprise a first thermally conductive resin layer on top of the at least one battery cell.

The cell cover may include side surface portions extending vertically from the lower surface and corresponding to both the side surfaces of the respective at least one battery cell, and upper ends of the side surface portions may be in contact with the first thermally conductive resin layer.

The battery assembly may further comprise blocking prevention bumps adjacent to the at least one cell cover venting hole adjacent to the electrode leads among the at least one cell cover venting hole.

The battery assembly may further comprise a storage frame accommodating the plurality of battery cell units, and the storage frame may include at least one venting hole at a position corresponding to the at least one cell cover venting hole on a lower surface of the storage frame.

A battery pack according to an embodiment of the present disclosure includes the battery assembly and a pack housing accommodating the battery assembly.

The battery pack may further include a plurality of venting channels communicating with the cell cover venting hole and extending inside a bottom frame of the pack housing.

Each of the venting channels may communicate one-to-one with each of the plurality of battery cell units.

The battery assembly may further comprise a storage frame accommodating the plurality of battery cell units and including at least one venting hole at a position corresponding to the cell cover venting hole, and the venting channel may communicate with the venting hole.

The battery assembly may further comprise a first thermally conductive resin layer between an upper portion of the at least one battery cell and an upper surface of the storage frame, and the battery pack may further include a pack cover on an outer side of the storage frame and coupled to an upper portion of the pack housing.

The battery pack may further include a second thermally conductive resin layer between the pack cover and the upper surface of the storage frame.

According to embodiments of the present disclosure, when a thermal event occurs in a specific battery cell, propagation of the thermal event to other adjacent battery cells and battery assemblies can be minimized by venting gases, particles, flames, or the like only in a specific intended direction, thereby moving them along a predetermined path and discharging them to the outside.

The effects of the present disclosure are not limited to the above-described effects, and other effects not described will be apparently understood by one skilled in the art from the claims.

### [Description of the Drawings]

FIG. 1 is a perspective view showing a battery assembly according to an embodiment of the present disclosure.
FIG. 2 is an exploded perspective view of the battery assembly of FIG. 1.
FIG. 3 is a plan view showing a battery cell included in the battery assembly of FIG. 2.
FIG. 4 is a perspective view showing a battery cell stack included in the battery assembly of FIG. 2 and including the battery cell of FIG. 3.
FIG. 5 is an exploded perspective view of a battery cell unit included in the battery cell stack of FIG. 4.
FIG. 6(a) is a perspective view of the cell cover of FIG. 5 viewed from a different angle, and FIG. 6(b) is a cross-sectional view taken along line A-A' of FIG. 5.
FIG. 7 is an exploded perspective view of a battery cell unit included in a battery assembly according to another embodiment of the present disclosure.
FIG. 8 is an exploded perspective view showing a battery pack according to still another embodiment of the present disclosure.
FIG. 9 is a cross-sectional view taken along line B-B' of FIG. 8.

### [Mode for Invention]

In the following detailed description, only certain exemplary embodiments of the present disclosure have been shown and described, simply by way of illustration. The present disclosure can be variously implemented and is not limited to the following embodiments.

The drawings and description are to be regarded as illustrative in nature and not restrictive. Like reference numerals designate like elements throughout the specification.

In addition, the size and thickness of each configuration shown in the drawings are arbitrarily shown for understanding and ease of description, but the present disclosure is not limited thereto. In the drawings, the thickness of layers, films, panels, regions, etc., are exaggerated for clarity. In the drawings, for understanding and ease of description, the thickness of some layers and areas is exaggerated.

Further, it will be understood that when an element such as a layer, film, region, or substrate is referred to as being "on" another element, it can be directly on the other element or intervening elements may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

In addition, unless explicitly described to the contrary, the word "comprise (include)", and variations such as "comprises (includes)" or "comprising (including)", will be understood to imply the inclusion of stated elements but not the exclusion of any other elements.

Further, in the entire specification, when it is referred to as "on a plane", it means when a target part is viewed from above, and when it is referred to as "on a cross-section", it means when the cross-section obtained by cutting a target part vertically is viewed from the side.

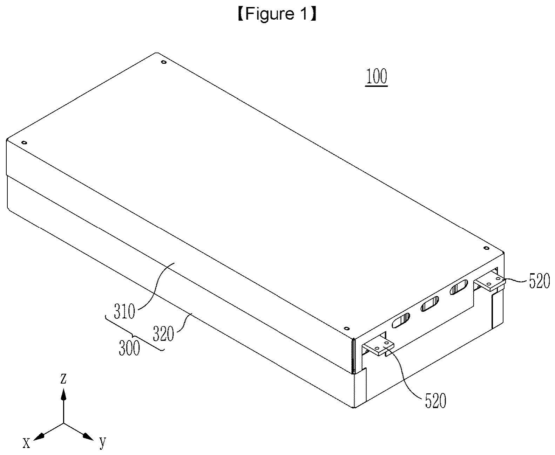

Hereinafter, a battery assembly according to an embodiment of the present disclosure will be described with reference to FIGS. 1 to 6.

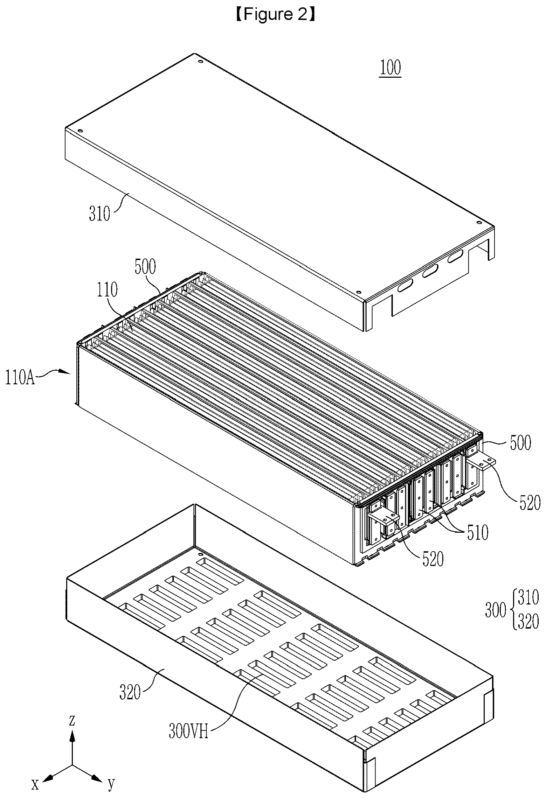

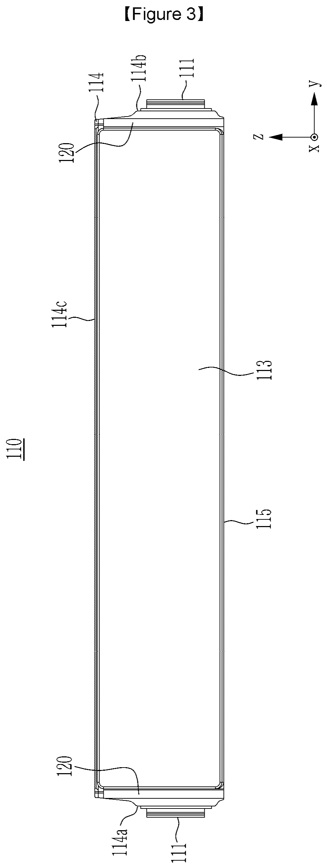

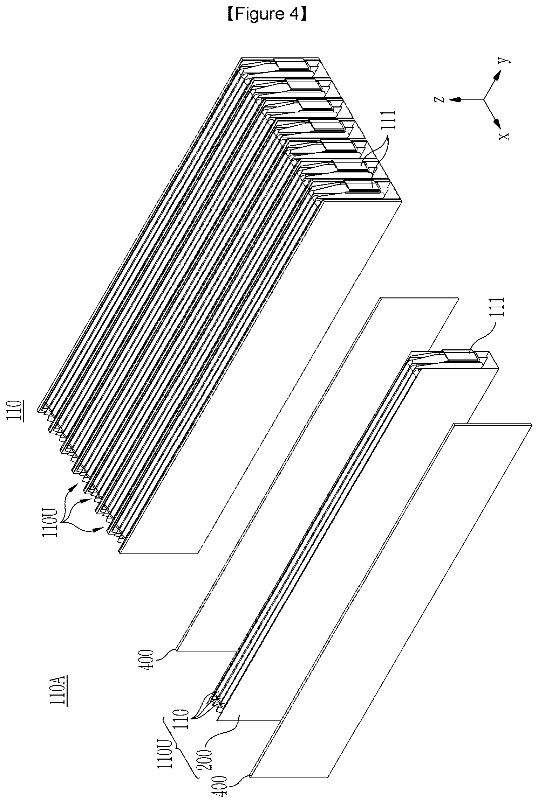

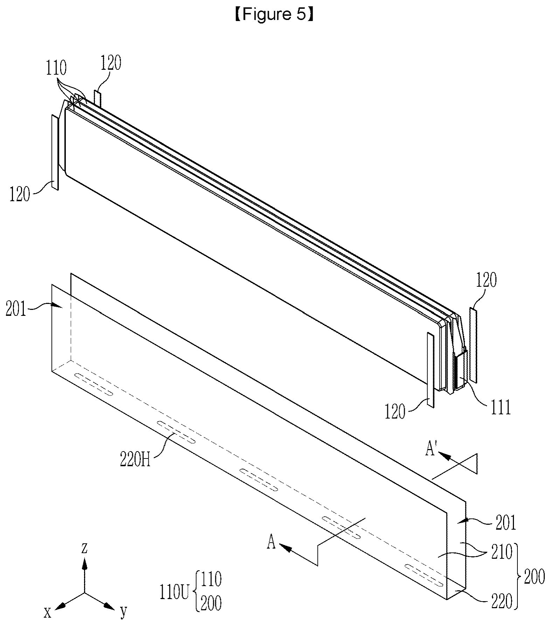

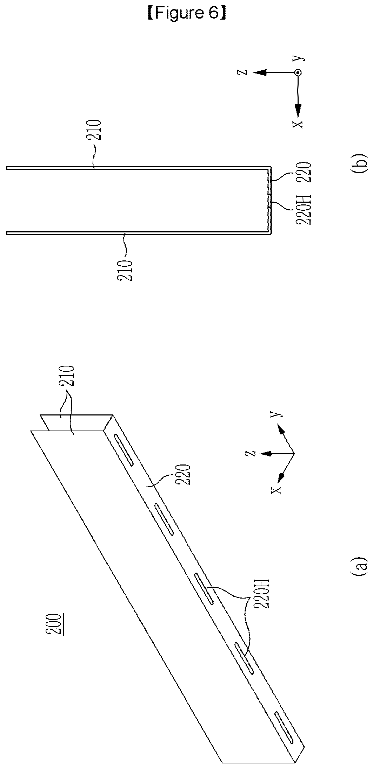

FIG. 1 is a perspective view showing a battery assembly according to an embodiment of the present disclosure, FIG. 2 is an exploded perspective view of the battery assembly of FIG. 1, FIG. 3 is a plan view showing a battery cell included in the battery assembly of FIG. 2, FIG. 4 is a perspective view showing a battery cell stack included in the battery assembly of FIG. 2 and including the battery cell of FIG. 3, FIG. 5 is an exploded perspective view of a battery cell unit included in the battery cell stack of FIG. 4, FIG. 6(a) is a perspective view of the cell cover of FIG. 5 viewed from a different angle, and FIG. 6(b) is a cross-sectional view taken along line A-A' of FIG. 5.

Referring to FIGS. 1 to 5, battery cells 110 according to the present embodiment may be stacked along one direction to form a battery cell stack 110A. Below, the battery cell 110 will first be described.

The battery cell 110 according to the present embodiment may be various types of battery cells, for example, a pouch-type battery cell, a prismatic battery cell, or a cylindrical battery cell. For example, as shown in FIG. 3, the battery cell 110 according to the present embodiment may be a pouch-type battery cell. Below, a pouch-type battery cell will be described, but the battery cell 110 according to the present embodiment is not limited thereto, and various types of battery cells may be applied.

The battery cell 110 according to the present embodiment may have a shape in which an electrode assembly having electrode leads 111 protruding in one direction or in both directions is stored in a pouch case 114. Such a battery cell 110 may have a rectangular sheet shape. The battery cell 110 may be formed by storing an electrode assembly in a pouch case 114 made of a laminate sheet including a resin layer and a metal layer, and then bonding an outer peripheral portion of the pouch case 114. For example, the battery cell 110 may have a structure in which two electrode leads 111 face each other and protrude from one end portion 114a and the other end portion 114b of a cell body 113. As another example, a structure in which all electrode leads 111 of the battery cells 110 protrude in one direction is also possible. One of the electrode leads 111 is a positive electrode lead and the other is a negative electrode lead.

The battery cell 110 may be manufactured by bonding both end portions 114a and 114b of the pouch case 114 and one side surface portion 114c connecting them in a state in which an electrode assembly (not shown) is stored in the pouch case 114. In other words, the battery cell 110 according to an embodiment of the present disclosure has a total of three sealing portions corresponding to both end portions 114a and 114b and one side surface portion 114c, and the sealing portions have a structure that is sealed by a method such as fusion, and the remaining other side surface portion may be composed of a folding portion 115. That is, the battery cell 110 according to the present embodiment may be a pouch-type secondary battery in which the electrode assembly is stored inside the pouch case 114 and the outer periphery of the pouch case 114 is sealed to form a sealing portion.

The pouch case 114 made of the laminate sheet may include an inner resin layer for sealing, a metal layer for preventing penetration of materials, and an outermost outer resin layer. Based on the electrode assembly inside the pouch case 114, the inner resin layer may be located on the innermost side, the outer resin layer may be located on the outermost side, and the metal layer may be located between the inner resin layer and the outer resin layer.

The outer resin layer may have excellent tensile strength and weather resistance relative to its thickness and exhibit electrical insulation properties in order to protect the electrode assembly from the outside. The outer resin layer may include polyethylene terephthalate (PET) resin or nylon resin. The metal layer can prevent air, moisture, and the like from entering the pouch-type secondary battery. The metal layer may include aluminum (Al). The inner resin layers may be thermally fused to each other by heat and/or pressure applied in a state in which the electrode assembly is embedded. The inner resin layer may include casted polypropylene (CPP) or polypropylene (PP).

The pouch case 114 may be divided into two parts, and at least one of the two parts may be formed with a concave storage portion in which the electrode assembly can be seated. The pouch case 114 may be divided into two parts, and at least one of the two parts may be formed with a concave storage portion in which the electrode assembly can be seated. The pouch case may be sealed in this way to manufacture the battery cell 110, which is a pouch-type secondary battery.

Within the battery cell stack 110A, the battery cells 110 may be comprised of two or more battery cells. The plurality of battery cells 110 may be stacked so as to be electrically connected to each other. In particular, the plurality of battery cells 110 may be stacked upright along a direction parallel to the x-axis. Accordingly, the electrode leads 111 may protrude in a direction perpendicular to the direction in which the battery cells 110 are stacked. In the battery cell 110, one electrode lead 111 may protrude toward the y-axis direction, and the other electrode lead 111 may protrude toward the -y-axis direction. In the case of the battery cells in which the electrode leads 111 protrude in only one direction, the electrode leads 111 may protrude in the x-axis direction or the -x-axis direction.

FIG. 4 is a perspective view showing a battery cell stack included in the battery assembly of FIG. 2 and including the battery cell of FIG. 3, and FIG. 5 is an exploded perspective view of a battery cell unit included in the battery cell stack of FIG. 4.

Referring to FIGS. 4 and 5 together, in the battery cell stack 110A according to the present embodiment, the battery cells 110 may be stacked to form a battery cell unit 110U. Specifically, the battery assembly 100 according to the present embodiment may include a plurality of battery cell units 110U, and each of the battery cell units 110U may include at least one battery cell 110 and a cell cover 200 that partially surrounds at least one battery cell 110.

That is, according to the present embodiment, one or more battery cells 110 may be arranged inside the cell cover 200 to form the battery cell unit 110U, and these battery cell units 110U may be stacked along one direction to form the battery cell stack 110A.

Within the battery cell unit 110U, the battery cell 110 may be comprised of one or more battery cells. FIG. 4 shows an example in which the battery cell unit 110U includes three battery cells 110. The plurality of battery cells 110 may be stacked so as to be electrically connected to each other. In particular, the plurality of battery cells 110 may be stacked along a direction parallel to the x-axis while standing upright with one surface of the cell body 113 facing another within the battery cell unit 110U.

FIG. 6(a) is a perspective view of the cell cover of FIG. 5 viewed from a different angle, and FIG. 6(b) is a cross-sectional view taken along line A-A' of FIG. 5.

Referring to FIGS. 6(a) and 6(b) together, the cell cover 200 according to the present embodiment may include side surface portions 210 that covers one side surface of the battery cell 110. Additionally, the cell cover 200 may include a lower surface portion 220 that connects the side surface portions 210 and covers a lower portion of at least one battery cell 110.

The cell cover 200 may include two side surface portions 210 and one lower surface portion 220. One side surface of the side surface portions 210 and one side surface of the lower surface portion 220 may be perpendicular, and the side surface portions 210 may extend upward from both opposite sides of the lower surface portion 220. The cell cover 200 according to the present embodiment may have a shape in which an upper side is open. That is, when the cell cover 200 in FIG. 5 is cut along the xz plane, the cell cover 200 may have a 'U' shape. The cell cover 200 may be provided to surround at least a part of three of the remaining four surfaces of the six-sided battery cell 110 excluding two surfaces on which the electrode leads 111 are formed. In the present embodiment, the cell cover is provided to surround the remaining three surfaces, excluding two surfaces on which the electrode leads 111 are formed and the upper surface of the battery cell 110, that is, the surface in the +Z direction of the Z-axis.

Corresponding to the two surfaces on which the electrode leads 111 are formed, open portions 201 defined by two side surface portions 210 and one lower surface portion 220 are formed on both sides. That is, the open portions 201 are formed at both ends in the Y-axis direction in the drawing. The electrode lead 111 can be exposed through the open portion 201.

A foamed layer 120 is formed adjacent to the electrode lead 111 and between the side surface portion 210 and the battery cell 110. As described below, the foamed layer 120 expands during thermal runaway and blocks the open portion 201, thereby guiding venting gases and the like in a specific direction. The foamed layer 120 will be described in more detail below.

Note that, as described above, since the battery cells 110 are arranged between the side surface portions 210 of the cell cover 200, the battery cells 110 within the battery cell stack 110A can be divided into battery cell units 110U. By dividing the battery cells 110 within the battery cell stack 110A into the battery cell units 110U using the cell covers 200, the propagation of a thermal event or thermal runaway can be delayed. Even when a thermal event or thermal runaway occurs in one battery cell 110, the thermal event or thermal runaway is prevented from propagating to the battery cells 110 of other adjacent battery cell units 110U because the side surface portions 210 of the cell covers 200 are positioned in the direction in which the battery cells 110 are stacked.

The cell cover 200 can not only delay the thermal runaway phenomenon but also supplement the rigidity of the battery cell 110, thereby enabling the battery cell 110 to remain upright. The cell cover 200 can support the battery cell 110 by covering at least a part of the battery cell 110 and can ensure that the stacked state of the battery cells 110 arranged upright in one direction is stably maintained. More specifically, the side surface portions 210 of the cell cover 200 support the side surfaces of the battery cell 110, thereby maintaining the upright state of the battery cell 110.

The cell cover 200 may be made of a material that has a high melting point so as not to melt even in the event of thermal runaway and can block the propagation of a thermal event or thermal runaway. In addition, the cell cover 200 can be made of a material having mechanical strength above a predetermined range so as to stably support the battery cell 110, thereby protecting the battery cell 110 from external impact and the like. The material used for the cell cover 200 is not particularly limited but may include, for example, at least one of a mica material, steel, aluminum (Al), or a plastic material.

A pad 400 may be interposed between the battery cell units 110U, i.e., between the cell covers 200. In addition, a pad 400 may also be interposed on an outer surface of the cell cover 200 of the battery cell unit 110U positioned on the outermost side. The pad 400 can function as a thermal barrier that can block the propagation of the thermal event or thermal runaway. That is, there is no special limitation on the material of the pad 400 according to the present embodiment as long as it can exhibit a predetermined level of insulating performance. For example, the pad 400 may include a silicon (Si) material or an aerogel material.

Note that a lower surface portion 220 of the cell cover 200 according to the present embodiment may be formed with cell cover venting holes 220H. When high-temperature gases, particles or flames are generated in one battery cell 110 due to a thermal event, as described above, the side surface portions 210 of the cell cover 200 can prevent the high-temperature gases, particles or flames from propagating to adjacent battery cells 110. The high-temperature gases, particles or flames can be discharged through the cell cover venting holes 220H formed in the lower surface portion 220. The cell cover venting holes 220H may communicate with venting holes 300VH provided in a lower surface of the battery assembly 100.

In this case, the high-temperature gases, particles or flames can be discharged through the cell cover venting holes 220H, but as described above, the cell cover 200 includes the open portions 201 through which the electrode leads 111 are exposed. Therefore, there is a possibility that the high-temperature gases, particles or flames may be discharged through the open portions 201 through which the electrode leads 111 are exposed, in addition to the cell cover venting holes 220H. However, in an embodiment of the present disclosure, the foamed layers 120 are arranged adjacent to the electrode lead 111s, as described above. Therefore, it is possible to eliminate the possibility and to discharge the high-temperature gases, particles or flames in an intended direction, i.e., only through the cell cover venting holes 220H.

To this end, the foamed layer 120 may be formed of a foamable material that can expand in volume at high temperatures. For example, silicone-based materials, graphite-based materials, or the like may be used, and in particular, thermally expandable silicone foam members may be preferably used. The foamed layer 120 may be obtained by coating the material around the electrode lead 111, or may be formed by attaching a tape or the like made of a foamable material, but is not particularly limited.

The foamed layers 120 can expand in volume in a high-temperature environment, thereby filling spaces between the electrode lead 111 and the side surface portions 210 of the cell cover 200 to block the open portion 201. Therefore, when thermal runaway occurs, the venting gases can be prevented from venting toward the electrode lead 111 and instead be guided to vent in the intended direction, i.e., toward the cell cover venting holes 220H.

Note that the battery cell stack 110A is stored in a storage frame 300 or independently constitutes the battery assembly 100. That is, the battery cell stack 110A itself may be provided in multiples to directly constitute a battery pack 1000, or may be stored in the storage frame 300 and the storage frame may be provided in multiples to constitute a battery pack 1000. When the storage frame 300 is omitted and the battery cell stack 110A directly constitutes the battery pack 1000, the number of components can be reduced, thereby reducing cost and weight and increasing energy density. When the battery cell stack is stored in the storage frame 300 and then the battery pack 1000 is constituted, it may be advantageous for disassembly and reassembly, and the like. Below, a case in which the battery cell stack is stored in the storage frame 300 and then the battery pack 1000 is constituted will be described as an example, but no such limitation is intended. Referring to FIG. 1 and FIG. 2 together, the storage frame 300 may include an upper frame 310 and a lower frame 320, and the battery cell stack 110A may be stored in an internal space formed by the upper frame 310 and the lower frame 320. A lower surface of the battery assembly 100 is formed with venting holes 300VH that communicate with the cell cover venting holes 220H of the cell covers 200. Specifically, the lower surface of the lower frame 320 may be formed with the venting holes 300VH. The venting holes 300VH communicate with venting channels formed in a pack housing of a battery pack described below, enabling high-temperature gases, particles or flames generated by a thermal event in a specific battery cell 110 to be discharged to the outside. This will be described in more detail below.

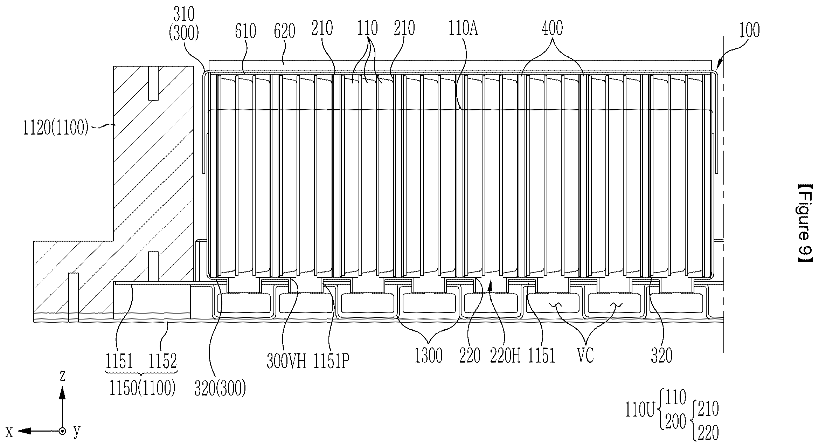

In addition, a lower surface, i.e. an inner surface, of the upper frame 310 faces upper end portions of the cell covers 200. The upper end portion of the cell cover 200 is open, exposing an upper portion of the battery cell 110. At the upper end portions of the cell covers 200, a first thermally conductive resin layer (610, shown in FIG. 9) may be formed between the upper portions of the battery cells 110 and the lower surface of the upper frame 310. The first thermally conductive resin layer 610 is formed to be in contact with upper ends of the side surface portions 210 of the cell covers 200 and is thus formed to cover the open upper ends of the cell covers 200. Thereby, the battery cell units 110U can be fixed, heat generated inside the battery cell units 110U can be cooled, and venting gases can be prevented from being discharged upward when a thermal event occurs.

In the battery cell stack 110A, a busbar frame 500 may be arranged on one surface or both surfaces in the direction in which the electrode leads 111 protrude. For example, in the battery cell 110 according to the present embodiment, the electrode leads 111 may protrude in both directions, i.e., in the y-axis direction and the -y-axis direction. Accordingly, the busbar frame 500 may be arranged on each of both surfaces of the battery cell stack 110A in the y-axis direction and in the -y-axis direction.

Busbars 510 and terminal busbars 520 may be mounted on a surface of the busbar frame 500 opposite to a surface facing the battery cell stack 110A. The electrode lead 111 may pass through a slit formed in the busbar frame 500, then be bent, and be connected to the busbar 510 or the terminal busbar 520. There is no particular limitation on the form in which the electrode lead 111 is connected to the busbar 510 or terminal busbar 520, as long as electrical connection is enabled, and for example, welding may be used. The battery cells 110 within the battery cell stack 110A can be electrically connected to each other using the busbars 510. Note that as shown in FIG. 1, a part of the terminal busbar 520 is exposed to the outside of the storage frame 300. The battery assembly 100 forms an HV connection with other battery assemblies or electrical components through the terminal busbars 520.

Note that according to the present embodiment, even when a thermal event occurs in some battery cells 110, the open portions 201 of the cell covers 200 where the electrode leads 111 are formed are blocked by the expansion of the foamed layers 120. As a result, the high-temperature gases, particles or flames generated by the thermal event can be prevented from being discharged to the outside of the electrode leads 111, and thus damage to the busbar frames 500 and various components included therein arranged on the outer side in the corresponding direction can also be prevented.

As such, according to an embodiment of the present disclosure, the foamed layers 120 arranged adjacent to the electrode leads 111 can expand at high temperatures to prevent the high-temperature gas, particles, or flames from being discharged through the open portions 201 of the cell cover 200, and can control venting such that it is enabled only in the intended direction (through the cell cover venting holes 220H of the lower surface portion 220), thereby improving safety through control of the venting gas.

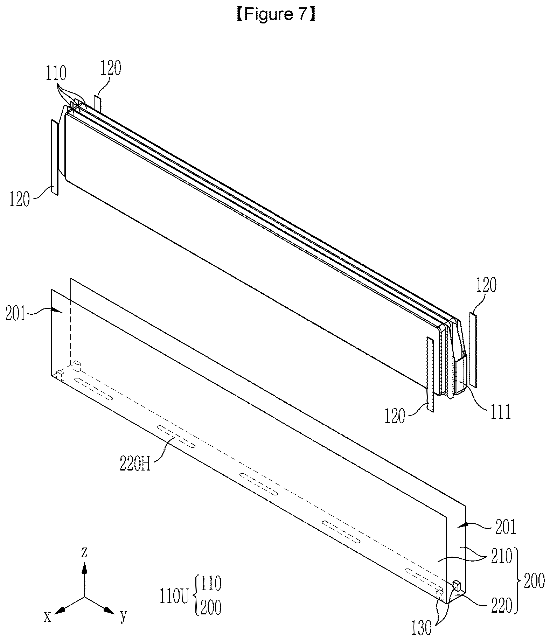

Below, a battery assembly according to another embodiment of the present disclosure will be described with reference to FIG. 7.

FIG. 7 is an exploded perspective view of a battery cell unit included in a battery assembly according to another embodiment of the present disclosure.

Referring to FIG. 7, a battery assembly according to another embodiment of the present disclosure is the same as the above-described embodiment, except that it further includes blocking prevention bumps 130, and thus only a description thereof will be given.

That is, as shown in FIG. 7, blocking prevention bumps 130 may be provided adjacent to the cell cover venting holes 220H adjacent to the electrode leads 111 among the cell cover venting holes 220H. The blocking prevention bump 130 functions to prevent the material of the expanded foamed layer 120 from flowing into the cell cover venting hole 220H and clogging the cell cover venting hole 220H when the foamed layer 120 expands in volume at high temperatures. To this end, the blocking prevention bump 130 may be arranged to be interposed between the cell cover venting hole 220H and the foamed layer 120. In addition, the blocking prevention bump 130 may be made of a material with excellent heat resistance, and may be formed, for example, by attaching a pad made of heat-resistant resin, or by attaching a pad made of the same material as the cell cover 200, but no such limitation is intended.

By further including the blocking prevention bumps 130 in this way, it is possible to prevent an undesirable portions, i.e., the cell cover venting holes 220H, from being clogged due to the expansion of the foamed layers 120, and to ensure that only the open portions 201 of the cell cover 200 are blocked, thereby more effectively guiding the venting gas in the intended direction.

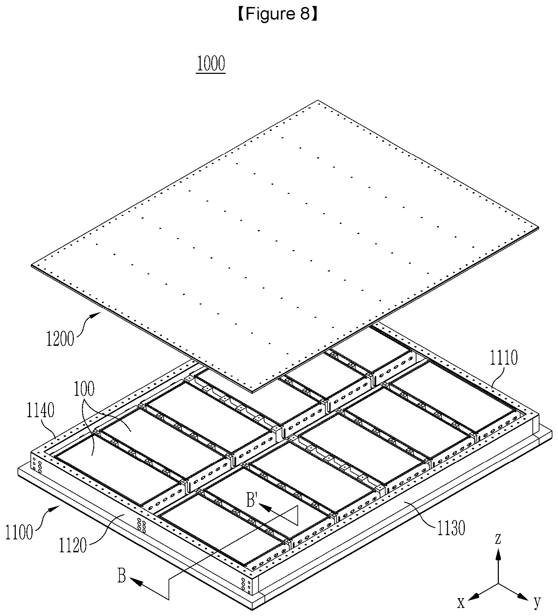

Below, a battery pack according to still another embodiment of the present disclosure will be described with reference to FIGS. 8 and 9 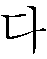 .

FIG. 8 is an exploded perspective view showing a battery pack according to still another embodiment of the present disclosure, and FIG. 9 is a cross-sectional view taken along line B-B' of FIG. 8.

Referring to FIGS. 8 and 9, a battery pack 1000 according to an embodiment of the present disclosure includes at least one battery assembly 100 as described above; and a pack housing 1100 that stores at least one battery assembly 100. A plurality of venting channels (VC) extending in one direction are formed inside the pack housing 1100, and the venting channels (VC) communicate with the venting holes 300VH of the battery assemblies 100 described above. Each of the venting channels (VCs) has an independent venting flow path that is not shared with the others.

When a thermal event occurs in a specific battery cell 110 and high-temperature gases, particles or flames are emitted from the corresponding battery cell 110, the gases, particles or flames flow from the battery cell 110 into the venting channel (VC). Here, the particles may be metal particles. The venting channels (VCs) do not share space with each other and can have independent venting flow paths. Accordingly, the high temperature gases, particles or flames passing through one venting channel (VC) do not propagate to other adjacent venting channels (VC), thereby minimizing the propagation of the thermal event occurring in a specific battery cell 110 to other battery cells 110.

The pack housing 1100 includes a bottom frame 1150 on which the battery assemblies 100 are placed, and the plurality of venting channels (VCs) may be formed inside the bottom frame 1150. Additionally, the floor frame 1150 is formed with open portions 1151P, which can guide the high-temperature gases, particles or flames generated during a thermal event of the battery cell 110 into the venting channels (VCs). Specifically, the venting hole 300VH formed in the lower frame 320 of the storage frame 300 can communicate with the venting channel (VC) through the open portion 1151P of the bottom frame 1150. Additionally, in the battery cell unit 110U according to the present embodiment, the cell cover venting hole 220H formed in the cell cover 200 can communicate with the venting hole 300VH. That is, the venting hole 300VH may be positioned corresponding to the open portion 1151P, and the cell cover venting hole 220H may be positioned corresponding to the venting hole 300VH.

Accordingly, when a thermal event occurs in a specific battery cell 110 and high-temperature gases, particles or flames are emitted from the corresponding battery cell 110, the gases, particles or flames may flow into the venting channels (VCs) inside the bottom frame 1150 of the pack housing 1100 via the cell cover venting holes 220H, the venting holes 300VH and the open portions 1151P. The gases, particles or flames flowing into the venting channels (VCs) are discharged to the outside of the battery pack 1000. The battery pack 1000 according to the present embodiment has a "bottom venting" structure that discharges high-temperature gases, particles, or flames generated inside the battery assembly 100 to the outside using the bottom frame 1150 of the pack housing 1100. As described above, in the upper region of the battery assembly 100, there is a high voltage current path, such as the HV (High Voltage) connection of the terminal busbar. Here, the HV connection is a connection that serves as a power source to supply power that requires high voltage, and refers to a connection between battery cells or a connection between battery assemblies. In this case, when high-temperature gases, particles, or the like caused by a thermal event in a battery cell come into contact with a high-voltage path such as an HV connection, a short circuit or arc discharge may occur, which may lead to additional explosion and flame generation. On the other hand, as described above, the battery pack according to the present embodiment has a "bottom venting" structure, so high-temperature gases, particles, or the like caused by the thermal event are discharged downward, that is, to the bottom frame 1150 of the pack housing 1100. Therefore, there is no risk of the high-temperature gases, particles, or the like coming into contact with the high-voltage path such as an HV connection, and ultimately safety against thermal runaway can be improved.

Note that, in the battery assembly 100 according to an embodiment of the present disclosure, the battery cells 110 may be arranged such that the folding portion 115 of the battery cell 110 faces upward and one side portion 114c of the battery cell 110 faces downward. That is, the battery cells 110 may be arranged such that the folding portion 115 of the battery cell 110 faces upward and the sealing portion of one side portion 114c of the battery cell 110 faces downward.

The lower end portion of the battery cell 110 may be the sealing portion where the pouch case 114 is sealed, and the upper end portion of the battery cell 110 is not a sealing portion where the pouch case 114 is sealed but may be the folding part 115 where the pouch case 114 is folded. Accordingly, the battery cell 110 may be arranged such that the sealing portion of the battery cell 110 faces the internal venting channel (VC) of the pack housing 1100. Additionally, the sealing portion of the battery cell 110 may be arranged to face the cell cover venting holes 220H of the cell cover 200. Referring to FIG. 4, the sealing portion is provided on one side portion 114c of the battery cell 110, and the battery cell may be positioned within the battery assembly 100 such that the sealing portion of the one side portion 114c faces downward and the folding portion 115 of the battery cell 110 faces upward.

When a thermal event or thermal runaway occurs in a battery cell 110, venting gases are generated in the battery cell 110 and the internal pressure of the battery cell 110 increases. The venting gases may be mainly discharged through the sealing portion of the battery cell 110. That is, due to increased internal pressure, the sealing is released at certain parts of the sealing portion, and the venting gases and the like may be discharged through the released sealing parts.

In the battery assembly 100 according to the present embodiment, the battery cells 110 may be arranged such that the lower end portion of the battery cell 110 becomes the sealing portion and the upper end portion of the battery cell 110 becomes the folding portion 115. With this arrangement, the "bottom venting" structure that discharges venting gases, particles, and the like generated in the battery cell 110 in the downward direction can be more clearly implemented. Each of the venting channels (VCs) has an independent venting flow path that is not shared with the others. Accordingly, gases, particles or flames flow into one venting channel (VC) communicating with a battery cell 110 where a thermal event has occurred, but such gases, particles or flames do not propagate to other adjacent venting channels (VCs). Therefore, no gases, particles or flames flow into other battery cells 110 communicating with other venting channels (VCs), and ultimately, no thermal events are propagated or triggered to other battery cells 110.

In particular, each of the venting channels (VCs) may be positioned to correspond to each of the battery cell units 110U. Each of the venting channels (VCs) may communicate one-to-one with each of the battery cell units 110U. That is, the number of venting channels (VCs) may match the number of battery cell units 110U in the battery cell stack 110A, and any one battery cell unit 110U may communicate with only the venting channel (VC) located above it and may not communicate with other venting channels (VCs).

The high-temperature gases and flames generated in one battery cell unit 110U are discharged only through the venting channel (VC) communicating with the battery cell, and movement to other venting channels (VCs) is restricted. As described above, in the battery cell stack 110A according to the present embodiment, the battery cells 110 can constitute the battery cell unit 110U while being stored in the cell cover 200. The high-temperature gases or flames caused by the thermal runaway phenomenon occurring in one battery cell unit 110U are blocked by the side surface portions 210 of the cell cover 200 and are prevented from propagating to other adjacent battery cell units 110U. In addition, the open portions 201 of the cell cover 200 are also blocked by the expansion of the foamed layers 120, so that they cannot also be discharged in the directions in which the electrode leads 111 are arranged.

When the high-temperature gases or flames are discharged from the upper portion of the corresponding battery cell unit 110U to the venting channel (VC) corresponding one-to-one, the high-temperature gases or flames do not flow into other adjacent venting channels (VCs) because each of the venting channels (VCs) has an independent venting flow path that is not shared with the others. Therefore, there is no risk of the high-temperature gases or flames flowing back into the other adjacent venting channels (VC) and other battery cell units 110U located thereon. If the venting flow paths of the venting channels (VCs) are shared with each other, there is a risk that the high-temperature gases or flames generated may flow into a battery cell unit 110U where a thermal runaway phenomenon has not occurred because the internal pressure is relatively lower than that in a battery cell unit 110U where a thermal runaway phenomenon has occurred. In the present embodiment, by implementing an independent venting flow path for each battery cell unit 110U, thermal runaway propagation between the battery cells 110 is minimized and structural collapse of the battery pack is prevented.

In the battery pack 1000 according to the present embodiment, the number of battery cells 110 may be larger than the number of venting channels (VCs). A battery cell unit 110U may include a plurality of battery cells 110 and a cell cover that partially surrounds the battery cells 110. The plurality of battery cells 110 in the battery cell unit 110U may be covered with the cell cover 200. Each of the venting channels (VCs) may be positioned to correspond to each of the battery cell units 110U. One venting channel (VC) may correspond to multiple battery cells 110 within the battery cell unit 110U. Therefore, the number of battery cells 110 may be larger than the number of venting channels (VCs).

If the number of battery cells 110 and the number of venting channels (VCs) are set to be the same so that one venting channel (VC) corresponds to each individual battery cell 110, a large number of independent venting channels (VCs) must be provided, which is structurally complex and inefficient. Accordingly, in the present embodiment, multiple battery cells 110 are collected to constitute a battery cell unit 110U, and each of the venting channels (VCs) is provided to correspond to each of the battery cell units 110U, thereby efficiently implementing the independent venting channels (VC).

Note that the pack housing 1100 according to an embodiment of the present disclosure may be a housing with an open upper portion. The pack housing 1100 may include a bottom frame 1150 on which the battery assemblies 100 are placed and side portions 1110, 1120, 1130, and 1140 extending along edges of the bottom frame 1150. For example, the pack housing 1100 may include a first side portion 1110, a second side portion 1120, a third side portion 1130, a fourth side portion 1140, and a bottom frame 1150. The first to fourth side portions 1110, 1120, 1130, and 1140 may be arranged along the four sides of the edges of the floor frame 1150 having a rectangular shape. The battery assemblies 100 may be placed in an internal space formed by the floor frame 1150 and the first to fourth side portions 1110, 1120, 1130, and 1140.

Additionally, the open upper portion of the pack housing 1100 may be covered by a pack cover 1200. Although not specifically shown, a gasket may be interposed between the first to fourth side portions 1110, 1120, 1130, and 1140 of the pack housing 1100 and the pack cover to enhance sealability.

Additionally, a second thermally conductive resin layer 620 may be further arranged between the pack cover 1200 and the battery assembly 100. That is, as shown in FIG. 9, the second thermally conductive resin layer 620 may be further formed on the upper portion of the battery assembly 100 exposed through the open upper portion of the pack housing 1100. Since the second thermally conductive resin layer 620 is formed in sequential contact with the upper surface of the storage frame 300 of the battery assembly 100 and the first thermally conductive resin layer 610 formed on the inner side of the upper surface, it can effectively cool the heat generated inside the battery assembly 100 and release it to the outside. Additionally, for additional cooling, a cooling member (not shown) may be further included on the upper portion of the battery assembly 100. As the "bottom venting" structure that discharges high-temperature gases, particles or flames generated inside the battery assembly 100 to the outside using the bottom frame 1150 of the pack housing 1100 is implemented, the cooling member may be located at the upper portion rather than the bottom of the battery assembly 100. There is no particular limitation on the shape or method of the cooling member as long as it can cool the heat generated in the battery assembly 100. For example, the cooling member may be a heat sink with a coolant circulating inside. In addition, the cooling member is not limited thereto and can be applied in various forms.

The floor frame 1150 according to the present embodiment may include a venting plate 1151 on which the battery assembly 100 is placed and a lower plate 1152 positioned below the venting plate 1151. Venting units 1300 may be positioned between the venting plate 1151 and the lower plate 1152, and the venting channels (VCs) described above may be formed in the venting units 1300.

In the battery pack structure of "lower venting", a space between the venting plate 1151 and the lower plate 1152 is utilized as a space where gases or flames flow, i.e., the venting channels (VCs) are formed. Additionally, the venting unit 1300 may be implemented by the venting channel (VC) with independent venting flow paths that do not share the space with each other. Additionally, the open portion 1151P described above may be formed in the venting plate 1151 of the floor frame 1150. That is, the venting plate 1151 may include the open portion 1151P formed at a portion corresponding to the venting hole 300VH of the battery assembly 100, and the venting hole 300VH may communicate with the venting channel (VC) via the open portion 1151P. The open portion 1151P may be formed by opening at least a portion of a region of the venting plate 1151 corresponding to the venting channel (VC). There is no particular limitation on the number or area of the open portion 1151P. A flange portion 300F provided on an outer periphery of the venting hole 300VH can pass through the open portion 1151P of the bottom frame 1150 and be inserted into the venting flow path of the venting channel (VC).

According to an embodiment of the present disclosure as described above, even when a thermal event occurs in some cells and high-temperature gases, flames, and particles are generated, it is possible to discharge them in the intended direction and discharge them to the outside through a flow path formed in the battery pack. Particularly, during this process, the high-temperature gases are blocked from propagating to adjacent battery cell units by the cell cover, and the open portions of the cell cover are blocked by the expansion of the foamed layers. As a result, the venting of the gases can be controlled more effectively, and thus the safety of the battery assembly and the battery pack can be enhanced.

In the present exemplary embodiment, terms indicating directions such as front, rear, left, right, up, and down are used, but these terms are used only for convenience of description and may vary depending on the location of the target object or the location of the observer.

The battery assembly and the battery pack can be applied to various devices. Specifically, the battery module or battery pack described above can be applied to vehicle means such as an electric bike, an electric vehicle, and a hybrid electric vehicle, or an energy storage system (ESS), but is not limited thereto and can also be applied to various devices that can use a secondary battery.

Although the preferred exemplary embodiments of the present disclosure have been described in detail, the scope of the present disclosure is not limited thereto, and various modifications and improvements made by one skilled in the art by using the basic concept of the present disclosure defined in the following claims also fall within in the scope of the present disclosure.

### [Explanation of Reference Numerals and Symbols]

100: battery assembly
110: battery cell
110U: battery cell unit
110A: battery cell stack
120: foamed layer
130: blocking prevention bump
200: cell cover
300: storage frame
400: pad
1000: battery pack

## Claims

1. A battery assembly comprising:
a plurality of battery cell units, each comprising at least one battery cell and a cell cover covering a lower surface and both side surfaces of the respective at least one battery cell, wherein,
the cell cover comprises at least one cell cover venting hole at a lower surface portion corresponding to the lower surface of the respective at least one battery cell,
electrode leads protrude from both end surfaces in a longitudinal direction of the respective at least one battery cell, and
a foamed layer is adjacent to at least one of the electrode leads of the respective at least one battery cell.

2. The battery assembly of claim 1, wherein:
the cell cover comprises open portions on both sides through which the electrode leads are exposed, and
the foamed layer is configured to expand in volume at high temperatures to block both the open portions on both sides.

3. The battery assembly of claim 1, further comprising:
a first thermally conductive resin layer on top of the at least one battery cell.

4. The battery assembly of claim 3, wherein:
the cell cover comprises side surface portions extending vertically from the lower surface and corresponding to both the side surfaces of the respective at least one battery cell, and
upper ends of the side surface portions are in contact with the first thermally conductive resin layer.

5. The battery assembly of claim 1, further comprising:
blocking prevention bumps adjacent to the at least one cell cover venting hole adjacent to the electrode leads among the at least one cell cover venting hole.

6. The battery assembly of claim 1, further comprising:
a storage frame accommodating the plurality of battery cell units,
wherein the storage frame comprises at least one venting hole at a position corresponding to the at least one cell cover venting hole on a lower surface of the storage frame.

7. A battery pack comprising:
the battery assembly of claim 1; and
a pack housing accommodating the battery assembly.

8. The battery pack of claim 7, further comprising:
a plurality of venting channels communicating with the cell cover venting hole and extending inside a bottom frame of the pack housing.

9. The battery pack of claim 8, wherein:
each of the venting channels communicates one-to-one with each of the plurality of battery cell units.

10. The battery pack of claim 8, wherein:
the battery assembly further comprises a storage frame accommodating the plurality of battery cell units and comprising at least one venting hole at a position corresponding to the cell cover venting hole, and
the venting channel is communicates with the venting hole.

11. The battery pack of claim 8, wherein:
the battery assembly further comprises a first thermally conductive resin layer between an upper portion of the at least one battery cell and an upper surface of the storage frame, and
the battery pack further comprises a pack cover on an outer side of the storage frame and coupled to an upper portion of the pack housing.

12. The battery pack of claim 11, further comprising:
a second thermally conductive resin layer between the pack cover and an upper surface of the storage frame.
